# EUROPEAN PATENT SPECIFICATION

(11) **EP 2 149 247 B1**
(45) Date of publication and mention of the grant of the patent: **05.04.2017**
(21) Application number: 08751306.5
(22) Date of filing: 22.05.2008
(51) Int. Cl.: H04L 29/08, G06Q 30/02

(54) **APPARATUS, COMPUTER-PROGRAM AND METHOD FOR PROVIDING WIDGETS INCLUDING ADVERTISEMENTS FOR ASSOCIATED WIDGETS**
GERÄT, COMPUTERPROGRAMM UND VERFAHREN ZUR BEREITSTELLUNG VON ANWENDUNGEN MIT WERBEINHALTEN FÜR DIE ENTSPRECHENDEN ANWENDUNGEN
DISPOSITIF, PROGRAMME D'ORDINATEUR POUR FOURNIR DES GADGETS LOGICIELS COMPRENANT DES PUBLICITÉS POUR DES GADGETS LOGICIELS ASSOCIÉS

(30) Priority: 25.05.2007 US 753786; 27.02.2008 US 66134; 16.05.2008 US 121838
(43) Date of publication of application: 03.02.2010
(73) Proprietor: Nokia Technologies Oy, 02610 Espoo (FI)
(72) Inventor: PYHALAMMI, Seppo, FI-00670 Helsinki (FI); SIHVOLA, Tuomo, FI-02940 Espoo (FI); KUMLIN, Jan, FI-02170 Espoo (FI)
(74) Representative: Swindell & Pearson Limited
(86) International application number: PCT/IB2008/052028
(87) International publication number: WO 2008/146217

(56) References cited:
- WO-A-00/33197
- US-A1- 2005 055 644
- US-A1- 2007 112 630
- US-B1- 6 336 131

## Description

### FIELD OF THE INVENTION

The present invention generally relates to systems and methods of providing widgets to a terminal, and more particularly, relates to providing widgets including advertisements to other, associated widgets to facilitate the terminal user downloading the advertised widgets.

### BACKGROUND OF THE INVENTION

US2005/0055644 (D1) discloses a method, system and program product for obscuring supplemental web content. In D1, supplemental web content (e.g., an advertisement) referenced in a requested markup language document is detected and reduced in quality (i.e., obscured). According to D1, in reducing the supplemental web content in quality, the invention in D1 can employ any number of techniques such as removing color, animation or sound, reducing contrast or resolution, blurring the content, etc. In D1, the requested markup language document is rendered with the reduced quality supplemental web content. According to D], the supplemental web content can then be restored to its original quality, if the user so desires, based upon a prompt.

Electronic access to and distribution of information has grown in importance as a result of networks such as the Internet connecting individuals on a global scale. Even individuals who are on travel or vacation may connect to communication and information networks through mobile communication devices like mobile telephones. For example, many smartphones allow users to browse the web, check and send e-mails and make telephone calls while they are on the move. Business people, in one instance, may use such devices to seek information involving business news, stock prices and/or weather report From a social perspective, information access may further be directed toward obtaining gossip information, web logs (i.e., blogs) and/or traffic alerts.

Typically, an individual must access desired information by manually navigating to a particular site and/or manually searching for the topic of interest. For example, a mobile device user interested in up-to-date stock quotes may enter a particular stock quote web address into a browser and subsequently enter the stock symbol or symbols. In another example, an individual who does not know where to access stock information may enter a search website address to search for stock quotes. The individual may then be required to parse through multiple search results to find a suitable web site. In either case, an individual may have to take several steps before receiving the information they desire.

In an effort to overcome a number of the aforementioned drawbacks, user interface elements commonly referred to as "widgets" have been developer to provide information to users in a more convenient manner. In this regard, a widget may be considered a downloadable, interactive virtual tool (software tool) that provides content such as headline news, exchange rates, sports results, stock quotes, weather forecasts, multilingual phrase dictionaries, encyclopedias, maps, entertainment listings, personal online calendars, or the like to a user. But although widgets may overcome a number of the aforementioned drawbacks, it is usually desirable to improve upon existing technologies, including those related to widgets such as to further improve widget user experience.

### SUMMARY OF THE INVENTION

In light of the foregoing background, embodiments of the present invention provide an improved network entity, terminal, computer-readable storage medium and method for providing widgets including advertisements for associated widgets.

According to various, but not necessarily all, embodiments of the invention there is provided an apparatus according to claim 1.

According to various, but not necessarily all, embodiments of the invention there is provided a method according to claim 12.

According to various, but not necessarily all, embodiments of the invention there is provided a computer program according to claim 15.

According to one example of the present invention not currently claimed in independent form, a network entity (e.g., origin server, digital broadcaster, etc.) is provided and includes a processor. The processor is configured to send a first widget to a mobile terminal. The first widget is associated with a second widget, and the mobile terminal is configured to present content of the first widget in a display of the mobile terminal and in a manner including a content item related to the second widget. The processor is therefore also configured to receive, from the mobile terminal, a request for the second widget based on the presentation of content of the first widget including the content item related to the second widget. Further, the processor is configured to send the second widget to the mobile terminal in response to the request, where the mobile terminal is configured to receive the second widget and present content of the second widget in the display.

More particularly, the processor may be configured to receive, from the mobile terminal, a request for additional content related to the second widget based on the presentation of content of the first widget including the content item related to the second widget. The processor may then be configured to send the additional content to the mobile terminal, where the mobile terminal may be configured to present the additional content in the display. Thus, the processor may also be configured to receive the request for the second widget based on the presentation of the additional content related to the second widget.

The processor may be configured to send, to the mobile terminal, the content item related to the second widget before the mobile terminal presents content of the first widget including the content item related to the second widget. Before sending the respective content to the mobile terminal, however, the processor may be configured to receive, from the mobile terminal, a request for the content item related to the second widget, where the mobile terminal may be configured to send the request based on presentation of an indicia of the first widget. More particularly, for example, the processor may be configured to receive the request from the mobile terminal configured to send the request based on presentation of the indicia of the first widget in a dashboard in the display, whereby the dashboard includes indicia for each of a plurality of widgets. Alternatively, for example, the processor may be configured to receive the request from the mobile terminal configured to send the request based on presentation of the indicia of the first widget in a minimized view of the first widget. And in another alternative, for example, the processor may be configured to receive the request from the mobile terminal configured to send the request based on presentation of content of the first widget in a maximized view of the widget.

According to another example of the present invention not currently claimed in independent form, a terminal is provided and includes a display, a memory, and a processor. The memory is configured to store a first widget that is associated with a second widget. The processor is configured to present content of the first widget and a content item related to the second widget in the display, where the content item is presented in a predetermined relationship with respect to presentation of the content of the first widget. The processor is further configured to initiate a request, to a network entity, to receive the second widget, the request being initiated based on the presentation of the content item.

The processor of the mobile terminal may be further configured to receive the content item from a network entity before the presentation of the content item. In such instances, the processor may be configured to receive the content item in conjunction with a campaign. In this regard, the campaign may be defined based on one or more geographies, one or more mobile terminal models, one or more user profiles, the first widget and/or a number of times a network entity has distributed the first widget.

The processor may be configured to present content including an indicia of the first widget. In such instances, the processor may be configured to present the content item in place of the indicia of the first widget for at least a predefined period of time. More particularly, for example, the processor may be configured to periodically switch between presenting the indicia of the first widget and the content item. And in another example, the processor may be configured to present the indicia of the first widget in a dashboard including indicia of each of a plurality of widgets.

According to other aspects of the present invention, computer-readable mediums and methods are provided. Embodiments of the present invention therefore provide an improved network entity, terminal and computer-readable storage medium for providing widgets including advertisements for associated widgets. As indicated above, and explained below, exemplary embodiments of the present invention may solve problems identified by prior techniques and provide additional advantages.

### BRIEF DESCRIPTION OF THE DRAWINGS

Having thus described the invention in general terms, reference will now be made to the accompanying drawings, which are not necessarily drawn to scale, and wherein:
FIG. 1 is a schematic block diagram of a wireless communications system according to one exemplary embodiment of the present invention including a cellular network and a data network to which a terminal is bi-directionally coupled through wireless RF links;
FIG. 2 is a schematic block diagram of an entity configured to operate as a terminal, origin server, digital broadcast receiving terminal and/or a digital broadcaster, in accordance with exemplary embodiments of the present invention;
FIG. 3 is a more particular schematic block diagram of a terminal, according to exemplary embodiments of the present invention;
FIG. 4 is a functional block diagram of a system for providing widgets to a terminal, according to exemplary embodiments of the present invention;
FIGS. 5a, 5b, 6a and 6b are functional block diagrams of the display of a terminal, according to exemplary embodiments of the present invention;
FIG. 7 is a functional block diagram of a system for providing, to a terminal, widgets including advertisements for associated widgets, according to exemplary embodiments of the present invention;
FIG. 8 is a flowchart including various steps in a method of providing, to a terminal, widgets including advertisements for associated widgets, according to exemplary embodiments of the present invention;
FIGS. 9a, 9b and 10 are data tables according to exemplary embodiments of the present invention;
FIGS. 11a, 11b, 11c, 12 and 13 are further functional block diagrams of the display of a terminal, according to exemplary embodiments of the present invention; and
FIGS. 14 and 15 are data tables according to other exemplary embodiments of the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

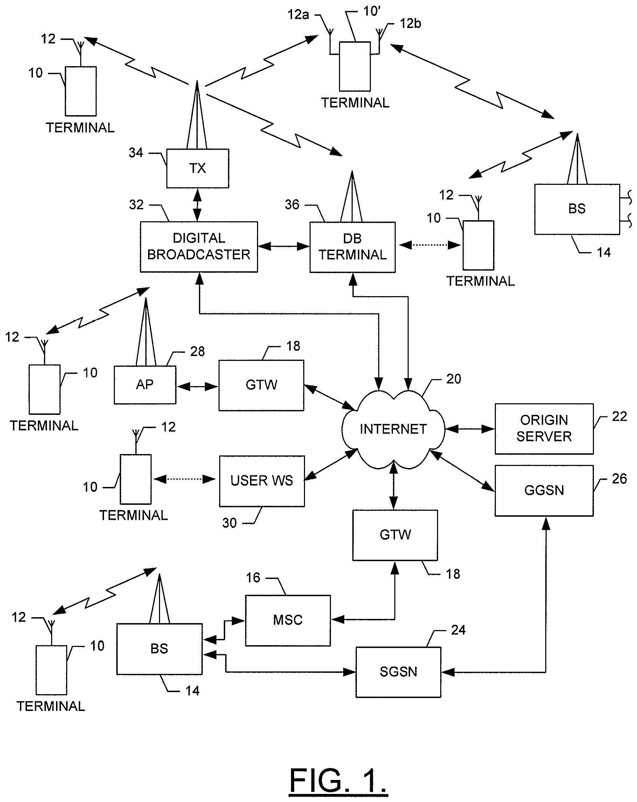

Referring to FIG. 1, an illustration of one type of terminal and system that would benefit from the present invention is provided. The system, method and computer program product of exemplary embodiments of the present invention will be primarily described in conjunction with mobile communications applications. It should be understood, however, that the system, method and computer program product of exemplary embodiments of the present invention can be utilized in conjunction with a variety of other applications, both in the mobile communications industries and outside of the mobile communications industries. For example, the system, method and computer program product of exemplary embodiments of the present invention can be utilized in conjunction with wireline and/or wireless network (e.g., Internet) applications.

As shown, a terminal **10** may include an antenna **12** for transmitting signals to and for receiving signals from a base site or base station (BS) **14.** The base station is a part of a cellular network that includes elements required to operate the network, such as a mobile switching center (MSC) **16.** As well known to those skilled in the art, the cellular network may also be referred to as a Base Station/MSC/Interworking function (BMI). In operation, the MSC is configured to route calls and messages to and from the terminal when the terminal is making and receiving calls. The MSC also provides a connection to landline trunks when the terminal is involved in a call.

The MSC **16** can be coupled to one or more data networks, such as one or more local area networks (LANs), metropolitan area networks (MANs), and/or wide area networks (WANs). The MSC can be directly coupled to the data network. In one typical embodiment, however, the MSC is coupled to a server gateway (GTW) **18,** and the GTW is coupled to a WAN, such as the Internet **20.** In turn, devices such as processing elements (e.g., personal computers, server computers or the like) can be coupled to the terminal **10** via the Internet. For example, as explained below, the processing elements can include one or more processing elements associated with one or more origin servers **22** or the like, one of which being illustrated in FIG. 1.

In addition to or in lieu of the cellular network, the BS **14** may be part of a packet-switched core network, such as a GPRS core network. In this regard, the BS may be coupled to a signaling GPRS (General Packet Radio Service) support node (SGSN) **24.** As known to those skilled in the art, the SGSN is typically configured to perform functions similar to the MSC **16** for packet switched services. The SGSN, like the MSC, can be coupled to a data network, such as the Internet **20.** The SGSN can be directly coupled to the data network. In a more typical embodiment, however, the SGSN is coupled to a GTW, such as a GTW GPRS support node (GGSN) **26,** and the GGSN is coupled to the Internet.

By coupling the SGSN **24** to the GGSN **26,** devices such as origin servers **22** can be coupled to the terminal **10** via the Internet **20,** SGSN and GGSN. In this regard, devices such as origin servers can communicate with the terminal across the SGSN and GGSN. For example, origin servers can provide content to the terminal, such as in accordance with the Multimedia Broadcast Multicast Service (MBMS). For more information on the MBMS, see Third Generation Partnership Project (3GPP) technical specification 3GPP TS 22.146, entitled: *Multimedia Broadcast Multicast Service (MBMS)*, the contents of which are hereby incorporated by reference in its entirety.

In addition to or in lieu of being coupled to the BS **14,** the terminal **10** can be coupled to one or more wireless access points (APs) **28.** The APs can comprise access points configured to communicate with the terminal in accordance with techniques such as, for example, radio frequency (RF), Bluetooth (BT), infrared (IrDA) or any of a number of different wireless networking techniques, including WLAN techniques. Additionally, or alternatively, the terminal can be coupled to one or more user workstations (WS) **30.** Each user workstation can comprise a computing system such as personal computers, laptop computers or the like. In this regard, the user workstations can be configured to communicate with the terminal in accordance with techniques such as, for example, RF, BT, IrDA or any of a number of different wireline or wireless communication techniques, including LAN and/or WLAN techniques. One or more of the user workstations can additionally, or alternatively, include a removable memory configured to store content, which can thereafter be transferred to the terminal.

The APs **30** and the workstations **30** may be coupled to the Internet **20.** Like with the MSC **16,** the APs and workstations can be directly coupled to the Internet. In one advantageous embodiment, however, the APs are indirectly coupled to the Internet via a GTW **18.** As will be appreciated, by directly or indirectly connecting the terminals and the origin server **22,** as well as any of a number of other devices, to the Internet, the terminals can communicate with one another, the origin server, etc., to thereby carry out various functions of the terminal, such as to transmit data, content or the like to, and/or receive content, data or the like from, the origin server. As used herein, the terms "data," "content," "information" and similar terms may be used to interchangeably to refer to data configured to be transmitted, received and/or stored in accordance with exemplary embodiments of the present invention. This content may include, for example, multimedia content with audio, video, textual and/or graphical portions. Thus, use of any such terms should not be taken to limit the spirit and scope of the present invention.

Further, the terminal **10** can additionally, or alternatively, be coupled to one or more digital broadcasters **32** via a digital broadcast network, such as a terrestrial digital video broadcasting (e.g., DVB-T, DVB-H, ISDB-T, ATSC, etc.) network. As will be appreciated, by directly or indirectly connecting the terminals and the digital broadcaster, the terminals can receive content, such as content for one or more television, radio and/or data channels, from the digital broadcaster. In this regard, the digital broadcaster can include, or be coupled to, a transmitter (TX) **34,** such as a DVB TX. Similarly, the terminal can include a receiver, such as a DVB receiver (not shown). The terminal can be configured to receive content from any of a number of different entities in any one or more of a different number of manners. In one embodiment, for example, the terminal can comprise a terminal **10'** configured to transmit and/or receive data, content or the like in accordance with a DVB (e.g., DVB-T, DVB-H, etc.) technique as well as a cellular (e.g., 1G, 2G, 2.5G, 3G, etc.) communication technique. In such an embodiment, the terminal **10'** may include an antenna **12a** for receiving content from the DVB TX, and another antenna **12b** for transmitting signals to and for receiving signals from a BS **14.** For more information on such a terminal, see U.S. Patent Application No. 09/894,532, entitled: *Receiver*, filed June 29, 2001, the contents of which is incorporated herein by reference in its entirety.

In addition to, or in lieu of, directly coupling the terminal **10** to the digital broadcaster **32** via the TX **34,** the terminal can be coupled to a digital broadcast (DB) receiving **terminal 36** which, in turn, can be coupled to the digital broadcaster **32,** such as directly and/or via the TX. In such instances, the digital broadcast receiving terminal can comprise a DVB receiver, such as a DVB receiver in the form of a set top box. The terminal can be locally coupled to the digital broadcast receiving terminal, such as via a personal area network. In one advantageous embodiment, however, the terminal can additionally or alternatively be indirectly coupled to the digital broadcast receiving terminal via the Internet **20.**

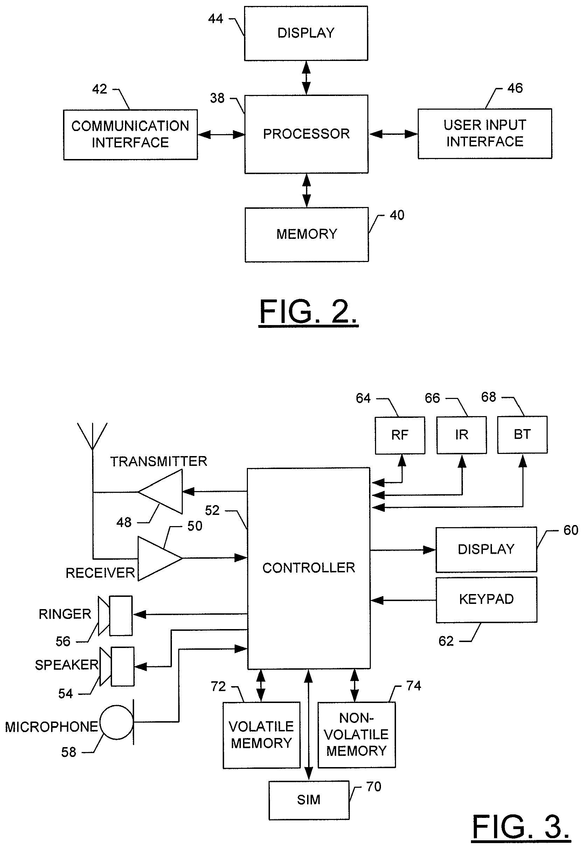

Referring now to FIG. 2, a block diagram of an entity configured to operate as a terminal **10,** origin server **22,** digital broadcast receiving terminal **36,** and/or a digital broadcaster **32** is shown in accordance with one embodiment of the present invention. Although shown as separate entities, in some embodiments, one or more entities may support one or more of a terminal, origin server, digital broadcast receiving terminal, and/or a digital broadcaster, logically separated but co-located within the entit(ies). For example, a single entity may support a logically separate, but co-located, terminal and digital broadcast receiving terminal. Also, for example, a single entity may support a logically separate, but co-located digital broadcast receiving terminal and digital broadcaster.

The entity configured to operate as a terminal **10,** origin server **22,** digital broadcast receiving terminal **36,** and/or a digital broadcaster **32** includes various means for performing one or more functions in accordance with exemplary embodiments of the present invention, including those more particularly shown and described herein. It should be understood, however, that one or more of the entities may include alternative means for performing one or more like functions, without departing from the spirit and scope of the present invention. More particularly, for example, as shown in FIG. 2, the entity can include a processor **38** connected to a memory **40.** The memory can comprise volatile and/or non-volatile memory, and typically stores content, data or the like. For example, the memory typically stores content transmitted from, and/or received by, the entity. Also for example, the memory typically stores software applications, instructions or the like for the processor to perform functions associated with operation of the entity in accordance with exemplary embodiments of the present invention. Further for example, and as explained below, the memory can store one or more widgets for providing content such as headline news, exchange rates, sports results, stock quotes, weather forecasts, multilingual phrase dictionaries, encyclopedias, maps, entertainment listings, personal online calendars, or the like to a user.

Although described herein as being implemented in software application(s), it should be understood that any one or more of the functions described herein may alternatively be implemented in firmware or hardware, without departing from the spirit and scope of the present invention. Generally, then, the terminal **10,** origin server **22,** digital broadcast receiving terminal **36,** and/or a digital broadcaster **32** can include one or more logic elements for performing various functions. As will be appreciated, the logic elements can be embodied in any of a number of different manners. In this regard, the logic elements performing the respective functions can be embodied in an integrated circuit assembly including one or more integrated circuits integral or otherwise in communication with a respective network entity (i.e., terminal, origin server, digital broadcast receiving terminal, digital broadcaster, etc.) or more particularly, for example, a processor **38** of the respective network entity. The design of integrated circuits is by and large a highly automated process. In this regard, complex and powerful software tools are available for converting a logic level design into a semiconductor circuit design ready to be etched and formed on a semiconductor substrate. These software tools automatically route conductors and locate components on a semiconductor chip using well established rules of design as well as huge libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the memory **40,** the processor **38** can also be connected to at least one interface or other means for displaying, transmitting and/or receiving data, content or the like. In this regard, the interface(s) can include at least one communication interface **42** or other means for transmitting and/or receiving data, content or the like, as well as at least one user interface that can include a display **44** and/or a user input interface **46.** The user input interface, in turn, can comprise any of a number of devices allowing the entity to receive data from a user, such as a keypad, a touch display, a joystick or other input device. As more particularly explained below, for example, the user input interface can include one or more directional keys (hard and/or soft keys) for directionally selecting ordered items, such as ordered channels of content.

FIG. 3 illustrates a more particular functional diagram of a terminal **10,** according to exemplary embodiments of the invention. It should be understood, that the terminal illustrated and hereinafter described is merely illustrative of one type of terminal that would benefit from the present invention and, therefore, should not be taken to limit the scope of the present invention. While several embodiments of the terminal are illustrated and will be hereinafter described for purposes of example, other types of terminals, such as portable digital assistants (PDAs), pagers, laptop computers and other types of voice and text communications systems, can readily employ the present invention.

The terminal **10** includes various means for performing one or more functions in accordance with exemplary embodiments of the present invention, including those more particularly shown and described herein. It should be understood, however, that the terminal may include alternative means for performing one or more like functions, without departing from the spirit and scope of the present invention. More particularly, for example, as shown in FIG. 3, the terminal may include a transmitter **48,** a receiver **50,** and a controller **52** or other processor that provides signals to and receives signals from the transmitter and receiver, respectively. These signals include signaling information in accordance with the air interface standard of the applicable cellular system, and also user speech and/or user generated data. In this regard, the terminal can be configured to operate with one or more air interface standards, communication protocols, modulation types, and access types. More particularly, the terminal can be configured to operate in accordance with any of a number of first-generation (1G), second-generation (2G), 2.5G and/or third-generation (3G) communication protocols or the like. For example, the terminal may be configured to operate in accordance with 2G wireless communication protocols IS-136 (TDMA), GSM, IS-95 (CDMA) or the like. Also, for example, the terminal may be configured to operate in accordance with 2.5G wireless communication protocols GPRS, Enhanced Data GSM Environment (EDGE), or the like. The terminal can additionally or alternatively be configured to operate in accordance with any of a number of different digital broadcasting techniques, such as the DVB technique (e.g., DVB-T, ETSI Standard EN 300 744). The terminal can also be configured to operate in accordance with any of a number of different broadcast and/or multicast techniques, such as the MBMS technique (e.g., 3GPP TS 22.146). Further, the terminal can be configured to operate in accordance with ISDB-T, DAB, ATSC techniques or the like. Some narrow-band AMPS (NAMPS), as well as TACS, terminals may also benefit from embodiments of the present invention, as should dual or higher mode terminals (e.g., digital/analog or TDMA/CDMA/analog phones).

It is understood that the controller **52** includes the circuitry required for implementing the audio and logic functions of the terminal. For example, the controller may be comprised of a digital signal processor device, a microprocessor device, and various analog to digital converters, digital to analog converters, and other support circuits. The control and signal processing functions of the terminal are allocated between these devices according to their respective capabilities. The controller thus also includes the functionality to convolutionally encode and interleave message and data prior to modulation and transmission. The controller can additionally include an internal voice coder (VC), and may include an internal data modem (DM). Further, the controller may include the functionally to operate one or more software applications, which may be stored in memory.

The terminal also comprises a user interface including a conventional earphone or speaker **54,** a ringer **56,** a microphone **58,** a display **60,** and a user input interface, all of which are coupled to the controller **52.** The user input interface, which allows the terminal to receive data, can comprise any of a number of devices allowing the terminal to receive data, such as a keypad **62,** a touch display (not shown) or other input device. In embodiments including a keypad, the keypad includes the conventional numeric (0-9) and related keys (#, *), and other keys used for operating the terminal. For example, the keypad can additionally or alternatively include directional keys (↑, ↓) for directionally selecting ordered items.

The terminal can also include one or more means for sharing and/or obtaining data from electronic devices, such as another terminal **10,** an origin server **22,** an AP **28,** a digital broadcast receiving terminal **36,** a digital broadcaster **32** or the like, in accordance with any of a number of different wireline and/or wireless techniques. For example, the terminal can include a radio frequency (RF) transceiver **64** and/or an infrared (IR) transceiver **66** such that the terminal can share and/or obtain data in accordance with radio frequency and/or infrared techniques. Also, for example, the terminal can include a Bluetooth (BT) transceiver **68** such that the terminal can share and/or obtain data in accordance with Bluetooth transfer techniques. Although not shown, the terminal may additionally or alternatively be configured to transmit and/or receive data from electronic devices according to a number of different wireline and/or wireless networking techniques, including LAN and/or WLAN techniques. In this regard, as shown in FIG. 1 with respect to terminal **10',** the terminal may include an additional antenna or the like to transmit and/or receive data from such electronic devices (e.g., digital broadcaster).

The terminal can further include memory, such as a subscriber identity module (SIM) **70,** a removable user identity module (R-UIM) or the like, which typically stores information elements related to a mobile subscriber. In addition to the SIM, the terminal can include other memory, such as volatile memory **72,** and/or other non-volatile memory **74** (embedded and/or may be removable non-volatile memory). For example, the other non-volatile memory can comprise embedded or removable multimedia memory cards (MMCs), Memory Sticks manufactured by Sony Corporation, EEPROM, flash memory, hard disk or the like.

The memories **70, 72, 74** can store any of a number of pieces of information, and data, used by the terminal to implement the functions of the terminal. For example, the memories can store an identifier, such as an international mobile equipment identification (IMEI) code, uniquely identifying the terminal, such as to the MSC **16.** The memories can also store one or more widgets for providing content such as headline news, exchange rates, sports results, stock quotes, weather forecasts, multilingual phrase dictionaries, encyclopedias, maps, entertainment listings, personal online calendars, or the like to a user.

In one or more configurations, a user of a terminal **10** may input desired data into the terminal, organize the data within the terminal, or display the information in a convenient manner. For example, a system for providing desired information in a terminal may include a system API (application program interface) through which a third-party widget source (e.g., origin server **22,** digital broadcaster **32,** etc.) may provide content to the terminal. In addition, the system may include a widget API for providing a standardized interface for communication with a user interface element including or otherwise displaying desired content. One such user interface element is commonly referred to as a "widget." In this regard, a widget may be considered a downloadable, interactive virtual tool (software tool) that provides content such as headline news, exchange rates, sports results, stock quotes, weather forecasts, multilingual phrase dictionaries, encyclopedias, maps, entertainment listings, personal online calendars, or the like to a user. A widget may be configured to continuously receive content, such as continuously updated content, from the widget source and/or one or more other sources, when the terminal or widget is operated in an online mode. This content may be formatted, for example, as a web feed such as in accordance with the RSS (Really Simple Syndication) format, Atom format or the like.

The system API may communicate with the widget via the widget API, for example. Also, the widget may access information from third-party sources via the widget API. The widget may include one or more applications linked to one or more sources for accessing, sending and/or retrieving information from those sources without relying on a separate application. More particularly, for example, the widget may include one or more web applications linked to one or more web servers (e.g., origin servers) for accessing, sending and/or retrieving information from those web servers without relying on a separate web browser.

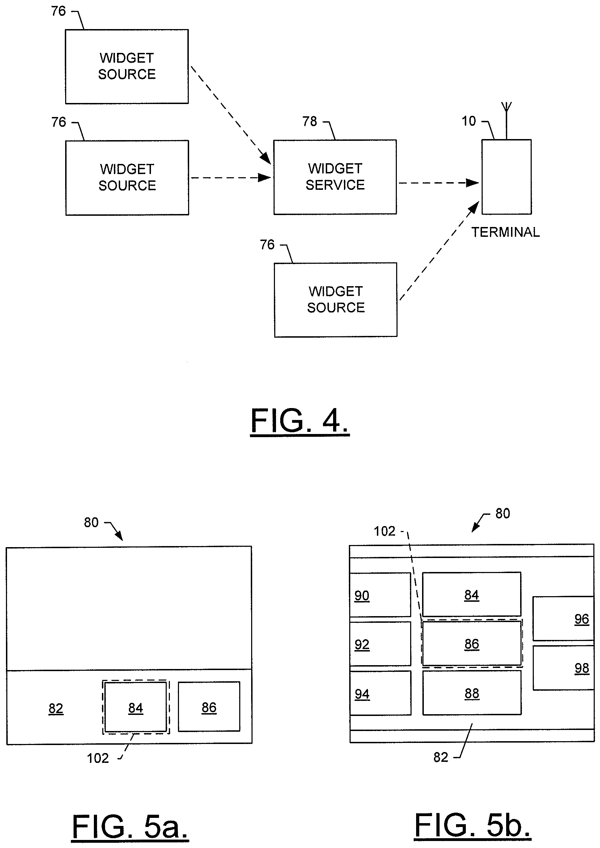

Widgets may be acquired in a variety of ways including through e-mail and/or by download from one or more sources, such as one or more origin servers **22** and/or digital broadcasters **32.** As shown in the functional block diagram of FIG. 4, one or more widget sources **76** (e.g., origin server **22,** digital broadcaster **32,** etc.) may provide respective one or more widgets to a terminal **10.** Additionally or alternatively, however, a particular source may offer to a terminal a service (shown as widget service **78**) whereby the widget service collects widgets from one or more other widget sources, and provides the collected widgets to the terminal. And in further exemplary embodiments, whether the widget sources provide widgets to a terminal themselves or through a widget service, the widget service may monitor the content provided by the widgets and notify the terminal of changes in that content. The terminal may therefore download or otherwise obtain the changed content for display to the user. In this regard, either or both of the source or service may implement a mobile server gateway for creating and maintaining mobile connections between a terminal and the respective source or service.

Widgets may be arranged and displayed on a dashboard located in a particular area of the display of a terminal **10.** Although reference may be made to arranging and displaying widgets, it should be understood that the arrangement and/or display of a widget may more particularly refer to content of the widget. In this regard, the content of a widget may include at various instances a representation (e.g., icon or other indicia) of the widget, and/or multimedia content presented by the widget. As explained herein, terms such as "present," "display" or the like may be used interchangeably. Further, such terms may not only refer to the actual presentation, display or the like of content and information by a display, but may separately refer to appropriate software (e.g., widget API) directing presentation, display or the like of the content and information by the display.

A dashboard may refer to a predefined area of the display in which one or more widgets may be placed and organized. The dashboard provides delivery of messages from the widget API to the service or web server. The dashboard may further include a dashboard API for providing access to terminal resources and for presenting a user interface corresponding to a widget. The dashboard API may contain at least two parts. One part may be an API for the development of widgets such as design, placement on a display, content, etc. Another part of the dashboard API may be provided for third-party developers. In another example, the dashboard API may be built over a terminal operating system or over any other API available on the terminal. In another example, the system may also include a mobile server gateway for creating and maintaining mobile connections between a terminal and a service.

As shown in FIGS. 5a and 5b, for example, the display **80** (e.g., display **44, 58**) of a terminal **10** may present a dashboard **82** on which one or more widgets may be situated or otherwise positioned (widgets **84** and **86** being shown in the embodiment of FIG. 5a; and widgets **84-98** being shown in the embodiment of FIG. 5b). In this regard, the dashboard may be defined by a fixed area of the display dedicated to presenting one or more types of information such as widgets. The area occupied by dashboard may be set by the user or predefined by a system default. The dashboard may also be a flexible area that expands or contracts depending on the amount of information to be displayed. In instances where the dashboard has a fixed size, widgets from various sources may compete for space on a particular user's dashboard. In some cases, one spot, for example, the middle of dashboard, may be more desirable than a left or right position.

The dashboard **82** may also include a frame **102** for selecting and opening a widget **84-98** on the dashboard. The frame may be movable with respect to the widgets, or alternatively the widgets may be movable with respect to the frame, to align the frame with a particular widget to thereby select the widget for opening. When aligned with a particular widget, the frame may be displayed and/or applied as a border to the widget. The frame may further be colored to stand out from the coloring of the widgets. Additionally or alternatively, the frame's shape and size may be automatically modified to suit the shape and size of the widget with which the frame is aligned. The dashboard may further be configured so that the frame may be movable to an area of the dashboard not having any widgets to thereby show that no widgets are currently being selected.

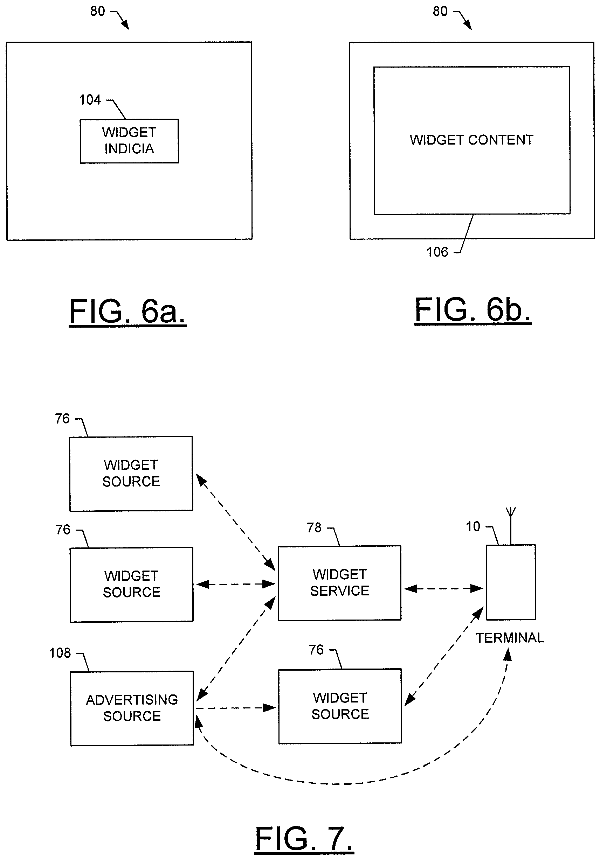

On a dashboard **82,** the widgets **84**, **86** may be represented by icons or other indicia **104** identifying the respective widgets. A user may then open a widget from the dashboard to direct the terminal to present the widget's content on the display **80.** The opened widget may be presented in a number of different manners, such as in a remaining portion of the display (portion other than that occupied by the dashboard) or in a portion or all of the display without the dashboard, and thus the other widgets, also being presented by the display. As shown in FIG. 6a, the widget may be presented in a minimized view whereby the opened widget's icon or other indicia is presented by the display without the dashboard, and thus, the other widgets. Alternatively, as shown in FIG. 6b, the widget may be presented in a maximized view whereby the widget and its content **106** are presented by the display, again without the dashboard. In addition to or in lieu of presenting the opened widget's icon or other indicia, the minimized view of the widget may include one or more items of content from the widget, such as by presenting one or more weather items (e.g., weather report summary) in the context of a widget generally providing weather forecasts, presenting one or more selected stock quotes in the context of a widget generally providing stock quotes, or the like. And although the widget may be presented in a minimized or maximized view, the display may be configured to selectively display the widget in its minimized or maximized views, such as in a manner as desired by the user.

In accordance with exemplary embodiments of the present invention, a widget (first widget) may be associated with one or more other widgets (e.g., second widget). During presentation of the widget, then, the one or more of the associated widget(s) may be advertised to the user to thereby encourage the user to select one or more of the associated, advertised widget(s). The selected widget(s) (e.g., second widget) may then be downloaded and/or presented for display by the user's terminal **10,** such as in a manner similar to that of the widget (first widget) associated therewith. Although the content of the associated widgets may be uncorrelated to that of the widget with which they are associated, the content may alternatively be related to that of the respective widget. For example, a widget presenting a television programming guide may be associated with another widget configured to present content related to a movie theater (both being correlated by their relationship to entertainment options available to the user).

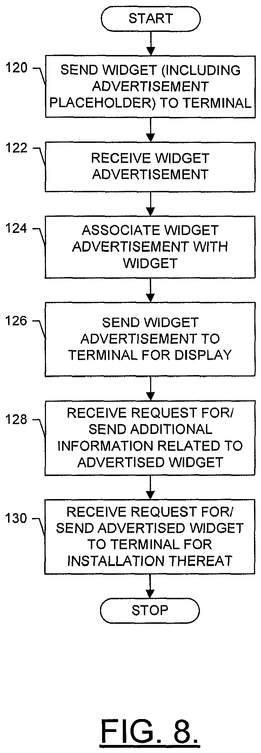

Reference is now made to FIGS. 7 and 8, which illustrate a functional block diagram and flowchart of a system and method according to exemplary embodiments of the present invention. As shown, similar to before, one or more widget sources **76** and/or widget services **78** may send one or more widgets to the terminal **10,** such as by the terminal downloading those widgets from the respective source(s) and/or service(s), as shown in block **120** of FIG. 8. The widget sent to the terminal may be configured similar to typical widgets downloaded by the terminal. In accordance with exemplary embodiments of the present invention, however, the widget further includes one or more advertisement placeholders, or other references or links to one or more advertisements for subsequent receipt and presentation in conjunction with the respective widget. In this regard, the placeholder(s)/reference(s) may be associated with predetermined advertisement(s), or may be associated with later-determined advertisement(s). Although the widgets sent to the terminal may include a placeholder or other reference to one or more advertisements, it should be understood that in various instances the widgets may instead include the respective advertisements.

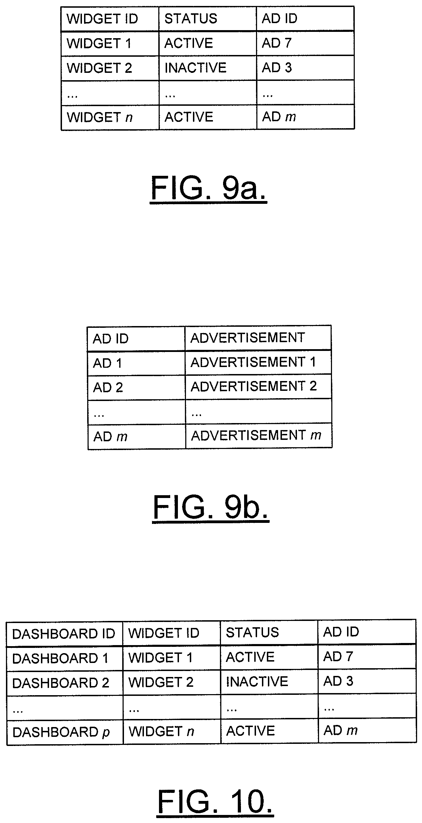

Before, after or as the widget source(s) **76** and/or widget service(s) **78** send widget(s) to the terminal **10,** the source(s) and/or service(s) may receive, from one or more advertising sources **108,** one or more widget advertisements directed to one or more widgets of the respective advertising sources, as shown in block **122.** In this regard, the system may include one or more advertising sources **108** (e.g., origin server **22,** digital broadcaster **32,** etc.) that may function as widget sources for respective one or more widgets, but may also be configured to supply advertisements for those respective widget(s). The source(s) and/or service(s) receiving the advertisements, then, may associate the advertisement(s) with one or more widgets, as shown in block **124.** The advertisements may be associated with widgets in any of a number of different manners, and under the direction of any of a number of different entities, including the respective advertising source, widget source and/or widget service. In one exemplary embodiment, the widgets may include or be otherwise associated with identifiers (e.g., alphanumeric identifiers) that uniquely identify those widgets, as shown for example in FIG. 9a (also showing a status of the respective widgets). Similarly, the advertisements may also include or be otherwise associated with identifiers that uniquely identify those advertisements, as shown for example in the data table of FIG. 9b. In such an embodiment, the advertisements may be associated with the widgets by associating the advertisements or, if provided, unique identifiers of the advertisements with identifiers of the respective widgets, as also shown in the data table FIG. 9a.

As explained below, an advertisement may be a widget (first widget) may be associated with another widget (e.g., second widget) such that during presentation of the widget, the associated widget may be advertised to the user. These widgets may be directly associated with one another, such as by associating an identifier of the widget (first widget) with an identifier of an advertisement for the associated widget (second widgets). Additionally or alternatively, however, the other widget may be indirectly associated with the widget based on the dashboard **82** within which the widget may be presented, where the widget may comprise any of a number of different widgets that may be presented or otherwise presentable on the dashboard. In such instances, the dashboard may also include or be otherwise associated with an identifier (dashboard identifier) that uniquely identifies the respective dashboard, and to which one or more widgets and/or advertisements may be associated, as shown in FIG. 10. In this regard, a dashboard identifier may identify a dashboard or otherwise distinguish a dashboard from other dashboards (with other identifiers) based on a number of different parameters of the respective dashboard. These parameters may include, for example, the country within which the terminal **10** operates the dashboard, the model of the respective terminal, the service **78** from which the dashboard receives and presents content for respective widgets, one or more widgets otherwise presentable or selected for presentation on the dashboard, or the like.

After the widget source(s) **76** and/or widget service(s) **78** send widget(s) to the terminal **10,** the display **80** of the terminal may present the respective widget(s) **84-98,** such as in a manner similar to that explained above. Additionally, the source(s) and/or service(s) may be configured to send, to the terminal for display in conjunction with the widget(s), one or more advertisements based on the placeholder(s)/reference(s) within those widget(s), as shown in block **126.** In this regard, the advertisements sent to the terminal may be selected based on the identifier(s) of the respective widget(s) sent to the terminal, and the advertisement(s) (or unique identifiers of the respective advertisements) associated with those identifier(s). The advertisements may be formatted in a number of different manners, but in one exemplary embodiment, may be formatted in accordance with a Mobile Marketing Association (MMA) standardized format.

More particularly, for example, the widget on the terminal **10** may be configured to send, to a source **76** or service **78,** a request for an advertisement for another widget associated therewith. This request may include, for example, an address (e.g., IP address) of the respective source or service, the identifier of the respective widget, and an identifier of the terminal (or user of the terminal). Before sending the request, however, the widget may (but need not) be configured to request and receive the terminal user's acceptance of advertisements, such as via the terminal's user interface. The respective source or service may then determine whether the respective terminal/terminal user may receive advertisements (for, e.g., subscription services). If the terminal/terminal user may receive advertisements, the source or service may determine the appropriate advertisement based on the widget identifier (the widget identifier being associated with an advertisement identifier - see, e.g., FIG. 9a), and return the appropriate advertisement to the terminal.

The advertisements may be sent the terminal **10** in any of a number of different manners. In accordance with a pull technique, for example, a widget **84-98** may be configured or otherwise triggered to request one or more advertisements for the widget at one or more instances in response to presentation of the widget in the dashboard **82,** opening of the widget, a change in the view of the opened widget (minimized view - see, e.g., FIG. 6a; or maximized view - see, e.g., FIG. 6b), passage of a given time period during presentation of the widget in the dashboard and/or a particular view of the opened widget, or the like. In accordance with a push technique, for example, the source(s) and/or service(s) may be configured to push the advertisements to the terminal at one or more instances in response to the terminal having received the respective widget, and/or in response to receiving an indication from the terminal related to presentation and/or opening of the respective widget (e.g., indication related to one or more of the triggering events explained above with respect to the pull technique). And in further embodiments, the advertisements may be sent the terminal in accordance with a combination of push and pull techniques. In either event, the advertisement(s) may be sent to the terminal for presentation directly or in directly in conjunction with the respective widget. In this regard, the advertisement(s) may be sent to the terminal for presentation directly in conjunction with the respective widget. Additionally or alternatively, however, the advertisement(s) may be sent to the terminal for presentation indirectly in conjunction with the respective widget, such as by being sent via email, SMS or other communication channels.

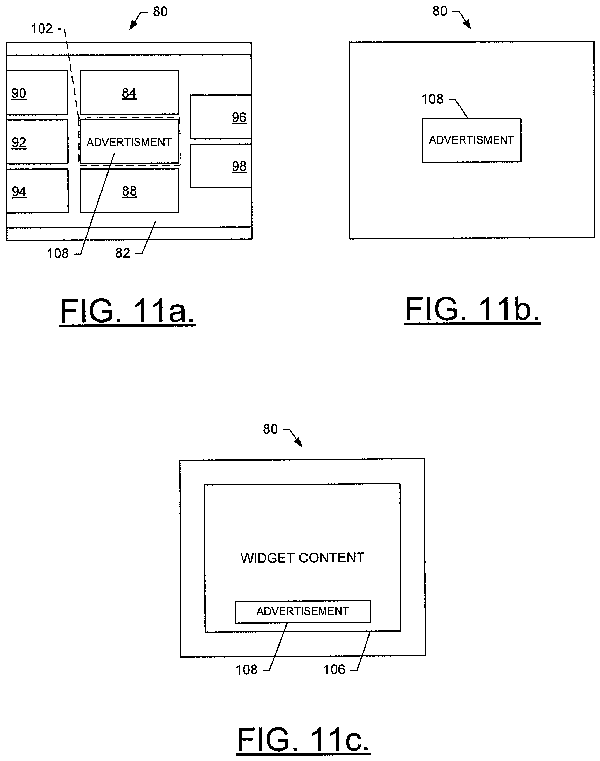

Regardless of how or when the advertisement(s) are sent to the terminal 10, the associated widget or dashboard API may be configured to present the advertisement(s), such as by presenting the advertisement(s) in a manner whereby the advertisement(s) are sized based on one or more parameters including, for example, the size of the display **80** or the area of the display or dashboard **82** available for presentation of the advertisement(s). The advertisement(s) may also be placed relative to the respective widget, dashboard 82 and/or one or more other widgets on the dashboard in one or more of a number of different manners. As shown in FIG. 11a, for example, the widget or dashboard API may be configured to present the advertisement(s) **108** in place of or on top of the indicia of the respective widget on (or other widget) the dashboard of the display, such as for at least a period of time after the respective widget is moved into and/or out of alignment with the frame **102** (or after the user otherwise skips from the respective widget to another widget). Additionally or alternatively, for example, the widget may be configured to present the advertisement(s) in place of or on top of the respective widget's indicia in the minimized view of the widget for at least a period of time after the widget has been opened and/or closed, as shown in FIG. 11b. These placements of the advertisement(s) relative to the associated widget (or other widget) may be accomplished, for example, by presenting the advertisement(s) in place of the indicia of the respective widget (or other widget), or underneath the indicia for the respective widget (or other widget) in which case the widget or dashboard API may be configured to remove the respective widget's indicia or switch the order of the respective widget's indicia and advertisement(s), at the appropriate instances. And further, for example, the widget or dashboard API may be configured to present the advertisement(s) along with content of the respective widget in the maximized view of the widget once the widget has been opened, as shown for example in FIG. 11c.

As suggested above, the widget may be configured to present the advertisement(s) in a continuous or discontinuous manner. For example, the widget may be configured to continuously present the advertisement(s) when the advertisement(s) are presented along with the content of the respective widget (see, e.g., FIG. 11c). Also, for example, the widget may be configured to periodically present the advertisement(s) with a given duration and period, when the advertisement(s) are presented in place of or on top of the respective widget's indicia in the dashboard **82** or minimized view (see, e.g., FIGS. 11a, 11b). In such a periodic presentation, the widget may be configured to switch between the advertisement(s) for the given duration, and the indicia for the respective widget (see, e.g., FIGS. 5b, 6a) between periods of the given duration.

The manner of placement of the advertisement(s) may be fixed for different advertisement(s) and/or associated widgets. The manner of placement may include an advertisement's size, shape (e.g., rectangular, mathematically-defined shape, etc.), position (e.g., top center, middle center, bottom center, etc.) and/or placement relative to the respective widget (e.g., in-widget: ON/OFF; underneath widget: ON/OFF), dashboard **82** (e.g., on-dashboard: ON/OFF) and/or one or more other widgets on the dashboard, the timing of presentation (e.g., start, duration, periods, etc.), or the like. In various instances, however, the same advertisement may have a number of different possible manners of placement, where the particular manner of placement of an advertisement at any given instance may be identified in a number of different manners.

As indicated above, advertisements (as well as the advertising widget - explained below) may include or be otherwise associated with identifiers (e.g., alphanumeric identifiers) that uniquely identify those advertisements. To specify a particular manner of placement of an advertisement, then, the identifier of that advertisement may include a first portion uniquely identifying the advertisement and a second portion including one or more parameters defining a manner of placement of that advertisement. More particularly, for example, the advertisement identifier may include a first alphanumeric portion uniquely identifying the respective advertisement, which may be concatenated with a second alphanumeric portion including one or more parameters defining the manner of placement of the respective advertisement. Thus, the same advertisement with different manners of placement may be identified by identifiers having the same first portion and different second portion. This same type of identifier (i.e., one that identifies the object and its placement) may also be applicable to widgets (including an advertising widget - explained below), selectable or separately presentable items of a widget (explained below), or the like.

An advertisement may have a number of parameters defining its placement, where some of the parameters may be modified, where some of the parameters may be optional, and where some of the parameters may be unavailable when others of the parameters are included. For example, an advertisement may include a position parameter including a position on the dashboard **82** where the respective advertisement may be positioned (relative coordinates, etc.). In instances in which the advertisement is positioned in-widget and not in-dashboard, the position parameter may be unavailable. Further, some of the parameters of an advertisement may be related to a cost associated with that advertisement (e.g., cost to the respective advertising source **108**).

In one exemplary embodiment, a service **78** may receive a request from an advertising source **108** to place an advertisement in connection with one or more particular widgets on a dashboard **82** (although some advertisements may be placed regardless of the particular widgets on the dashboard). In such instances, the service may receive an identifier of the respective advertisement, including its parameters; and associate that identifier with an identifier of the respective particular widget(s). For those advertisements that may be placed regardless of the particular widgets, the service may place the advertisement in a number of different manners, such as by associating the advertisement identifier with a dashboard identifier, including an advertisement parameter that may be interpreted to direct presentation of the advertisement "everywhere, every time," or associating the advertisement identifier with every widget identifier.

Regardless of how or when the widget or dashboard API presents the advertisement(s) in the display **80** of the terminal **10,** if the user is interested in the advertised widget, the user may select and the terminal may receive selection of the advertisement. In this regard, the advertisement may comprise or include a selectable link or control to enable the user to select the advertisement. In response, the widget may initiate the terminal downloading or otherwise receiving the advertised widget by the terminal. Before, downloading or otherwise receiving the advertised widget, however, it may be desirable for the user to receive further information as to the advertised widget so that the user may more effectively assess the user's interest in the widget. Thus, in one exemplary embodiment, in response to receiving selection of the advertisement, the widget may send a request for additional information as to the advertised widget. In this regard, the request may be sent to, and received by, the widget source **76** or service **78** from which the terminal received the respective widget, or the advertising source **108** originating the advertisement and the advertised widget, as shown in block **128.**

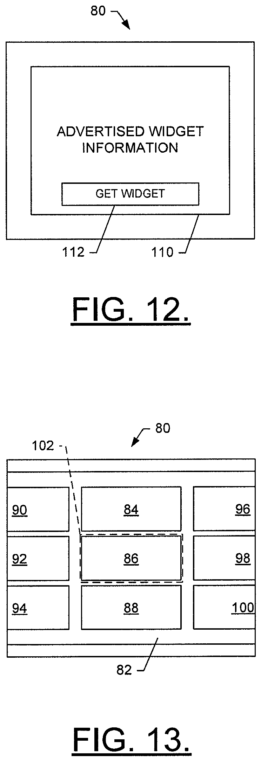

In response to the request, and as also shown in block **128,** the widget source **76,** service **78** or advertising source **108** may send, to the terminal **10,** the requested additional information related to the advertised widget. This information may be sent in any of a number of different forms. For example, the information may be sent as content configured for presentation by the widget that presented the advertisement and requested the additional information. Alternatively, the information may be sent as a separate advertising widget configured for operation by the terminal in a manner similar to other widgets, and which may be placed relative to the associated widget in a number of different manners, such as in manners similar to the respective advertisement(s). Regardless of the manner and form of sending the additional information, the terminal may receive and present the additional information **110** in the display **80,** as shown in FIG. 12.

As or after the terminal **10** presents the additional information **110,** again if the user is interested in the advertised widget, the user may direct and the terminal may receive direction, to download the advertised widget, such as via a control **112** presented along with the additional information. In response, the widget presenting the additional information, or separate advertising widget, may initiate the terminal downloading or otherwise receiving the advertised widget. For example, the advertised widget may be downloaded from a widget service **78** or the advertising source **108** originating the advertisement and the advertised widget. In this regard, the service or advertising source may receive a request for the advertised widget, to which the respective network entity may respond by sending the requested, advertised widget to the terminal, as shown in block **130.** Then, on receipt of the advertised widget, the terminal may install the widget for use on the terminal, including adding the advertised widget to the dashboard **82** of the display **80,** shown as added widget **100** in FIG. 13 (compare, e.g., FIG. 5b).

The inclusion of advertisements in widgets may be part of an advertising campaign for the respective advertised widgets. In this regard, the advertising campaign may be defined for one or more particular widgets (advertised widget), for a particular time, and may include a target number of advertised widgets to send to users (or rather respective terminals **10**). The advertising campaign may also include identification of one or more widgets for association with the advertised widgets so that the advertisements may be presented by the respective widgets. Further, the advertising campaign may identify target geographies (e.g., countries), terminal models or the like with which to advertise; and may identify characteristics (or profiles) of users to which to advertise.

And as such, in conjunction with an advertising campaign, or more generally in conjunction with providing the widgets, advertisements and/or advertised widgets to terminals **10,** one or more of the widget sources **76,** services **78** and/or advertising sources **108** may be configured to generate, track and/or maintain various data and/or statistics. This data and/or statistics may relate to the widgets including advertisements, the advertisements and/or the advertised widgets to thereby monitor one or more advertising campaigns. More particularly, for example, the data and/or statistics may include the number of advertised widgets to be sent to users (or rather respective terminals **10**), and may identify the geographies (e.g., countries), terminal models or the like to which widgets including the respective advertisements have been sent, and/or to which the advertised widget has been sent. Additionally, the data and/or statistics may identify characteristics (or profiles) of users to which widgets including the respective advertisements have been sent, and/or to which the advertised widget has been sent. Further, for example, the data and/or statistics may include data and/or statistics related to how often the widgets including the advertisements are used or otherwise opened.

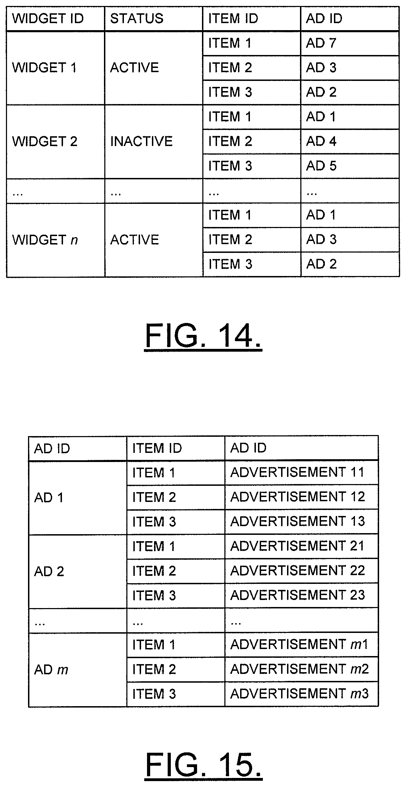

As explained above, a widget may be associated with one or more other widgets, and accordingly, one or more advertisements for those one or more widgets. In a more particular example, a widget may include a plurality of selectable or separately presentable items, each of which may be associated with a different advertisement for the same widget or a different widget (e.g., advertisements from different entities). Alternatively, a widget may include a plurality of selectable or separately presentable items, each of which may be associated with a different variation of the same advertisement for the same widget or a different variation of the same widget (e.g., advertisements from the same entity). Similar to the widgets and advertisements, these items may also include or be otherwise associated with identifiers (e.g., alphanumeric identifiers) that uniquely identify those items. Thus, for items associated with different advertisements, a widget identifier may be associated with multiple item identifiers, each of which is associated with an advertisement identifier, as shown in FIG. 14. Alternatively, for items associated with different variations of the same advertisement, an advertisement identifier may be associated with multiple item identifiers, each of which is associated with a different variation of the same advertisement, as shown in FIG. 15. Thus, for example, the data table of FIG. 9a may be implemented in conjunction with the data table of FIG. 15. Or, for example, the data table of FIG. 14 may be implemented in conjunction with the data table of FIG. 9b.

In instances in which a widget includes selectable items, for example, the widget on the terminal **10** may be configured to send, to a source **76** or service **78,** a request for an advertisement for another widget associated therewith. This request may include, for example, an address (e.g., IP address) of the respective source or service, the identifier of the respective widget, the identifier of a selectable item of the respective widget, and an identifier of the terminal (or user of the terminal). Again, before sending the request, however, the widget may (but need not) be configured to request and receive the terminal user's acceptance of advertisements, such as via the terminal's user interface. The respective source or service may then determine whether the respective terminal/terminal user may receive advertisements (for, e.g., subscription services). If the terminal/terminal user may receive advertisements, the source or service may determine the appropriate advertisement based on the widget identifier and item identifier, and return the appropriate advertisement to the terminal. The entities may then operate in a manner similar to before.

As also shown and explained above, the widget sources **76,** widget services **78** and advertising sources **108** are separate network entities. In some embodiments, however, one or more entities may support one or more of a widget source, service or advertising source, logically separated but co-located within the entit(ies). For example, a single entity may support a logically separate, but co-located, widget source and widget service. Also, for example, a single entity may support a logically separate, but co-located widget service and advertising source. And further, for example, a single entity may support a logically separate, but co-located widget source, widget service and advertising source.

As also explained above, the widget and associated widget(s) may comprise separate widgets installed and operated separate from one another on the terminal **10.** In various instances, however, one or more of the associated widget(s) may be installed and operated embedded within the widget with which the respective widget(s) are associated. The widget may therefore further include an API for capturing the embedded, associated widget(s). The API, then, may be coupled to one or more fields of the widget within which to embed the associated one or more widgets. To permit presentation of content of the embedded widget(s) within content of the widget, the field(s) of the widget may be sized smaller than the presentation of content of the widget so as to fit the content of the embedded widget(s) therewithin. If so desired, the field(s) may correspond to the placeholder(s) for the advertisement(s) for the respective associated widget(s). The API, then, may be further configured to capture the advertisement requested, and received from, the widget source(s) **76** and/or service(s) **78;** and the advertisement(s) may be coupled to the respective associated widget(s).

According to one exemplary aspect of the present invention, the functions performed by one or more of the entities of the system, such as the terminal **10**, digital broadcast receiving terminal **36,** and/or a digital broadcaster **32,** may be performed by various means, such as hardware and/or firmware, including those described above, alone and/or under control of a computer program product. The computer program product for performing one or more functions of exemplary embodiments of the present invention includes a computer-readable storage medium, such as the non-volatile storage medium, and software including computer-readable program code portions, such as a series of computer instructions, embodied in the computer-readable storage medium.

In this regard, FIGS. 7 and 8 are a functional block diagram and flowchart, respectively, of systems, methods and program products according to exemplary embodiments of the present invention. It will be understood that each block or step of the functional block diagram and flowchart, and combinations of blocks in the functional block diagram and flowchart, can be implemented by various means, such as hardware, firmware, and/or software including one or more computer program instructions. As will be appreciated, any such computer program instructions may be loaded onto a computer or other programmable apparatus to produce a machine, such that the instructions which execute on the computer or other programmable apparatus (i.e., hardware) create means for implementing the functions specified in the block(s) or step(s) of the functional block diagram and flowchart. These computer program instructions may also be stored in a computer-readable memory that can direct a computer or other programmable apparatus to function in a particular manner, such that the instructions stored in the computer-readable memory produce an article of manufacture including instruction means which implement the function specified in the block(s) or step(s) of the functional block diagram and flowchart. The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the block(s) or step(s) of the functional block diagram and flowchart.

Accordingly, blocks or steps of the flowcharts support combinations of means for performing the specified functions, combinations of steps for performing the specified functions and program instruction means for performing the specified functions. It will also be understood that one or more blocks or steps of the functional block diagram and flowchart, and combinations of blocks or steps in the functional block diagram and flowchart, can be implemented by special purpose hardware-based computer systems which perform the specified functions or steps, or combinations of special purpose hardware and computer instructions.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus (10) comprising:
means for causing presentation of content of a first widget in a display (44), the first widget being associated with a second widget,
means for causing presentation, in the display (44), of content of the first widget in a manner including a content item related to the second widget,
means for causing presentation of the content item in accordance with a predetermined relationship with respect to presentation of the content of the first widget, and
means for causing the apparatus (10) to initiate a request, to a network entity, to receive the second widget, the means being for causing the apparatus to initiate the request based on the presentation of the content item.

2. An apparatus (10) according to claim 1, further comprising means for causing the apparatus (10) to receive the content item from a network entity before the presentation of the content item.

3. An apparatus (10) according to claim 2, further comprising means for causing the apparatus (10) to receive the content item in conjunction with a campaign, the campaign being defined based on one or more of one or more geographies, one or more mobile terminal models, one or more user profiles, the first widget or a number of times a network entity has distributed the first widget.

4. An apparatus (10) according to any of claims 1 to 3, further comprising means for causing presentation of content including an indicia of the first widget, and
means for causing presentation of the content item in place of the indicia of the first widget for at least a predefined period of time.

5. An apparatus (10) according to claim 4, further comprising means for causing the apparatus (10) to periodically switch between causing presentation of the indicia of the first widget and the content item.

6. An apparatus (10) according to any of claims 4 to 5, further comprising means for causing presentation of the indicia of the first widget in a dashboard including indicia of each of a plurality of widgets.

7. An apparatus (10) according to any of claims 1 to 6, wherein the first widget has an identifier with which the second widget is associated, the initiated request to receive the second widget including the respective identifier.

8. An apparatus (10) according to any of claims 1 to 7, further comprising means for causing the apparatus (10) to receive the second widget in response to the request, and
means for causing presentation, in the display (44), of content of the second widget embedded within content of the first widget.

9. An apparatus (10) according to claim 8, wherein the first widget includes an interface configured to cause the apparatus (10) to capture the second widget received by the apparatus (10).

10. An apparatus (10) according to claim 9, wherein the first widget further includes a field coupled to the interface for receiving content of the second widget for presentation in the display (44).

11. An apparatus (10) according to any of claims 1 to 10, wherein the apparatus (10) is a mobile terminal.

12. A method comprising:
causing presentation of content of a first widget in a display (44) of an apparatus (10), the first widget being associated with a second widget;
causing presentation, in the display (44) of the apparatus (10), of content of the first widget in a manner including a content item related to the second widget, the content item being presented in accordance with a predetermined relationship with respect to presentation of the content of the first widget; and
initiating, by the apparatus (10), a request, to a network entity, to receive the second widget, the request being initiated based on the presentation of the content item.

13. A method according to claim 12, further comprising:
receiving the content item from a network entity before the causing presentation of the
content item.

14. A method according to any of claims 12 to 13, further comprising:
receiving the second widget in response to the request; and
causing presentation, in the display (44), content of the second widget embedded within content of the first widget.

15. A computer program that when executed by a processor performs the method of one or more of claims 12 to 14.

## Patentansprüche

1. Vorrichtung (10) umfassend:
Mittel zum Veranlassen des Darstellens von Inhalten einer ersten Anwendung in einer Anzeigevorrichtung (44), wobei die erste Anwendung einer zweiten Anwendung zugeordnet ist,
Mittel zum Veranlassen des Darstellens, in der Anzeigevorrichtung (44), von Inhalten einer ersten Anwendung in einer Weise, die ein sich auf die zweite Anwendung beziehendes Inhaltselement einschließt,
Mittel zum Veranlassen des Darstellens des Inhaltselements in Übereinstimmung mit einer vorbestimmten Beziehung im Zusammenhang mit dem Darstellen von Inhalten der ersten Anwendung, und
Mittel zum Veranlassen der Vorrichtung (10), eine Anforderung an eine Netzwerkeinheit einzuleiten, um die zweite Anwendung zu empfangen, wobei das Mittel dazu dient, die Vorrichtung zu veranlassen, die Anforderung basierend auf der Darstellung des Inhaltselements einzuleiten.

2. Vorrichtung (10) nach Anspruch 1, ferner umfassend Mittel zum Veranlassen der Vorrichtung (10), das Inhaltselement vor der Darstellung des Inhaltselements von einer Netzwerkeinheit zu empfangen.

3. Vorrichtung (10) nach Anspruch 2, ferner umfassend Mittel zum Veranlassen der Vorrichtung (10), das Inhaltselement in Verbindung mit einer Kampagne zu empfangen, wobei die Kampagne basierend auf einer oder mehrerer von einer oder mehreren Geografien, einem oder mehreren mobilen Endgerätemodellen, einem oder mehreren Benutzerprofilen, der ersten Anwendung oder einer Anzahl von Malen, in denen eine Netzwerkeinheit die erste Anwendung verteilt hat, definiert wird.

4. Vorrichtung (10) nach einem der Ansprüche 1 bis 3, ferner umfassend Mittel zum Veranlassen des Darstellens von Inhalten, einschließlich einer Kennzeichnung der ersten Anwendung, und
Mittel zum Veranlassen des Darstellens des Inhaltselements anstelle der Kennzeichnung der ersten Anwendung für zumindest eine vorgegebene Zeitspanne.

5. Vorrichtung (10) nach Anspruch 4, ferner umfassend Mittel zum Veranlassen der Vorrichtung (10), periodisch zwischen dem Veranlassen des Darstellens der Kennzeichnung der ersten Anwendung und des Inhaltselements umzuschalten.

6. Vorrichtung (10) nach einem der Ansprüche 4 bis 5, ferner umfassend Mittel zum Veranlassen des Darstellens der Kennzeichnung der ersten Anwendung in einem Dashboard, das die Kennzeichnung jeder aus einer Vielzahl von Anwendungen einschließt.

7. Vorrichtung (10) nach einem der Ansprüche 1 bis 6, wobei die erste Anwendung eine Kennung aufweist, der die zweite Anwendung zugeordnet ist, wobei die eingeleitete Anforderung zum Empfangen der zweiten Anwendung die entsprechende Kennung einschließt.

8. Vorrichtung (10) nach einem der Ansprüche 1 bis 7, ferner umfassend ein Mittel zum Veranlassen der Vorrichtung (10), die zweite Anwendung in Reaktion auf die Anforderung zu empfangen, und
Mittel zum Veranlassen des Darstellens, in der Anzeigevorrichtung (44), von Inhalten der zweiten Anwendung, die in Inhalten der ersten Anwendung eingebettet sind.

9. Vorrichtung (10) nach Anspruch 8, wobei die erste Anwendung eine Schnittstelle einschließt, die konfiguriert ist, um die Vorrichtung (10) zu veranlassen, die von der Vorrichtung (10) empfangene zweite Anwendung zu erfassen.

10. Vorrichtung (10) nach Anspruch 9, wobei die erste Anwendung ferner ein Feld einschließt, das mit der Schnittstelle gekoppelt ist, um Inhalte der zweiten Anwendung zum Darstellen in der Anzeigevorrichtung (44) zu empfangen.

11. Vorrichtung (10) nach einem der Ansprüche 1 bis 10, wobei die Vorrichtung (10) ein mobiles Endgerät ist.

12. Verfahren, umfassend:
Veranlassen des Darstellens von Inhalten einer ersten Anwendung in einer Anzeigevorrichtung (44) einer Vorrichtung (10), wobei die erste Anwendung einer zweiten Anwendung zugeordnet ist;
Veranlassen des Darstellens, in der Anzeigevorrichtung (44) der Vorrichtung (10), von Inhalten der ersten Anwendung in einer Weise, die ein sich auf die zweite Anwendung beziehendes Inhaltselement einschließt,
wobei das Inhaltselement in Übereinstimmung mit einer vorbestimmten Beziehung im Zusammenhang mit dem Darstellen von Inhalten der ersten Anwendung dargestellt wird; und
Einleiten, durch die Vorrichtung (10), einer Anforderung an eine Netzwerkeinheit, um die zweite Anwendung zu empfangen, wobei die Anforderung basierend auf der Darstellung des Inhaltselements eingeleitet wird.

13. Verfahren nach Anspruch 12, ferner umfassend:
Empfangen des Inhaltselements von einer Netzwerkeinheit vor dem Veranlassen des Darstellens des Inhaltselements.

14. Verfahren nach einem der Ansprüche 12 bis 13, ferner umfassend:
Empfangen der zweiten Anwendung in Reaktion auf die Anforderung; und
Veranlassen des Darstellens, in der Anzeigevorrichtung (44), von Inhalten der zweiten Anwendung, die in Inhalten der ersten Anwendung eingebettet sind.

15. Computerprogramm, das bei der Ausführung durch einen Prozessor das Verfahren nach einem oder mehreren der Ansprüche 12 bis 14 durchführt.

## Revendications

1. Appareil (10) comportant :
des moyens pour provoquer la présentation de contenu d'un premier gadget logiciel dans un affichage (44), le premier gadget logiciel étant associé à un deuxième gadget logiciel,
des moyens pour provoquer la présentation, dans l'affichage (44), de contenu du premier gadget logiciel d'une manière incluant un élément de contenu lié au deuxième gadget logiciel,
des moyens pour provoquer la présentation de l'élément de contenu selon une relation prédéterminée par rapport à la présentation du contenu du premier gadget logiciel, et
des moyens pour faire en sorte que l'appareil (10) lance une demande, vers une entité de réseau, pour recevoir le deuxième gadget logiciel, les moyens servant à faire en sorte que l'appareil lance la demande d'après la présentation de l'élément de contenu.

2. Appareil (10) selon la revendication 1, comportant en outre des moyens pour faire en sorte que l'appareil (10) reçoive l'élément de contenu en provenance d'une entité de réseau avant la présentation de l'élément de contenu.

3. Appareil (10) selon la revendication 2, comportant en outre des moyens pour faire en sorte que l'appareil (10) reçoive l'élément de contenu en conjonction avec une campagne, la campagne étant définie d'après un ou plusieurs éléments parmi une ou plusieurs géographies, un ou plusieurs modèles de terminal mobile, un ou plusieurs profils d'utilisateur, le premier gadget logiciel ou un nombre de fois où une entité de réseau a distribué le premier gadget logiciel.

4. Appareil (10) selon l'une quelconque des revendications 1 à 3, comportant en outre des moyens pour provoquer la présentation de contenu comprenant un repère du premier gadget logiciel, et
des moyens pour provoquer la présentation de l'élément de contenu au lieu du repère du premier gadget logiciel pendant au moins un laps de temps prédéfini.

5. Appareil (10) selon la revendication 4, comportant en outre des moyens pour faire en sorte que l'appareil (10) bascule périodiquement entre les actions de provoquer la présentation du repère du premier gadget logiciel et de l'élément de contenu.

6. Appareil (10) selon l'une quelconque des revendications 4 à 5, comportant en outre des moyens pour provoquer la présentation du repère du premier gadget logiciel dans un tableau de bord comprenant des repères de chaque gadget d'une pluralité de gadgets logiciels.

7. Appareil (10) selon l'une quelconque des revendications 1 à 6, le premier gadget logiciel possédant un identifiant auquel est associé le deuxième gadget logiciel, la demande lancée pour recevoir le deuxième gadget logiciel comprenant l'identifiant respectif.

8. Appareil (10) selon l'une quelconque des revendications 1 à 7, comportant en outre des moyens pour faire en sorte que l'appareil (10) reçoive le deuxième gadget logiciel en réponse à la demande, et des moyens pour provoquer la présentation, dans l'affichage (44), de contenu du deuxième gadget logiciel incrusté à l'intérieur d'un contenu du premier gadget logiciel.

9. Appareil (10) selon la revendication 8, le premier gadget logiciel comprenant une interface configurée pour faire en sorte que l'appareil (10) capture le deuxième gadget logiciel reçu par l'appareil (10).

10. Appareil (10) selon la revendication 9, le premier gadget logiciel comprenant en outre un champ couplé à l'interface pour recevoir un contenu du deuxième gadget logiciel en vue d'une présentation dans l'affichage (44).

11. Appareil (10) selon l'une quelconque des revendications 1 à 10, l'appareil (10) étant un terminal mobile.

12. Procédé comportant les étapes consistant à :
provoquer la présentation de contenu d'un premier gadget logiciel dans un affichage (44) d'un appareil (10), le premier gadget logiciel étant associé à un deuxième gadget logiciel ;
provoquer la présentation, dans l'affichage (44) de l'appareil (10), de contenu du premier gadget logiciel d'une manière incluant un élément de contenu lié au deuxième gadget logiciel, l'élément de contenu étant présenté selon une relation prédéterminée par rapport à la présentation du contenu du premier gadget logiciel ; et
faire lancer, par l'appareil (10), une demande, vers une entité de réseau, pour recevoir le deuxième gadget logiciel, la demande étant lancée d'après la présentation de l'élément de contenu.

13. Procédé selon la revendication 12, comportant en outre l'étape consistant à :
recevoir l'élément de contenu en provenance d'une entité de réseau avant de provoquer la présentation de l'élément de contenu.

14. Procédé selon l'une quelconque des revendications 12 à 13, comportant en outre les étapes consistant à :
recevoir le deuxième gadget logiciel en réponse à la demande ; et
provoquer la présentation, dans l'affichage (44), de contenu du deuxième gadget logiciel incrusté à l'intérieur d'un contenu du premier gadget logiciel.

15. Programme d'ordinateur qui, lorsqu'il est exécuté par un processeur, réalise le procédé selon une ou plusieurs des revendications 12 à 14.
